(19) Europäisches Patentamt
European Patent Office
Office européen des brevets

(11) **EP 3 570 689 B1**

(12) **EUROPEAN PATENT SPECIFICATION**

(45) Date of publication and mention
of the grant of the patent:
**11.12.2024   Bulletin 2024/50**

(21) Application number: **18700916.2**

(22) Date of filing: **22.01.2018**

(51) International Patent Classification (IPC):
**A23L 33/105** (2016.01)    **A23L 2/58** (2006.01)
**C09B 61/00** (2006.01)    **A23L 29/10** (2016.01)
**A23L 29/30** (2016.01)    **A23L 5/46** (2016.01)

(52) Cooperative Patent Classification (CPC):
(C-Sets available)
**A23L 33/105; A23L 2/58; A23L 5/46; A23L 29/10;**
**A23L 29/37; C09B 61/00;** A23V 2002/00     (Cont.)

(86) International application number:
**PCT/EP2018/051408**

(87) International publication number:
**WO 2018/134390 (26.07.2018 Gazette 2018/30)**

(54) **LIQUID COMPOSITION COMPRISING PHYCOCYANIN**

FLÜSSIGE ZUSAMMENSETZUNG MIT PHYCOCYANIN

COMPOSITION LIQUIDE COMPRENANT DE LA PHYCOCYANINE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **20.01.2017  EP 17000113**

(43) Date of publication of application:
**27.11.2019   Bulletin 2019/48**

(73) Proprietor: **ADM WILD Europe GmbH & Co. KG**
**69214 Eppelheim (DE)**

(72) Inventors:
 • **PUTTIN, Ramona**
  **15345 Eggersdorf (DE)**
 • **HEYDE, Annett**
  **13158 Berlin (DE)**
 • **CHRISTIANSEN, Christian**
  **13599 Berlin (DE)**

(74) Representative: **Grünecker Patent- und**
**Rechtsanwälte**
**PartG mbB**
**Leopoldstraße 4**
**80802 München (DE)**

(56) References cited:
**WO-A1-2012/059590     WO-A1-2015/090697**
**JP-A- 2004 203 952**

 • **DARIA SZYMANOWSKA-POWA?OWSKA: "The**
**effect of high concentrations of glycerol on the**
**growth, metabolism and adaptation capacity of**
**Clostridium butyricum DSP1", EJB ELECTRONIC**
**JOURNAL OF BIOTECHNOLOGY, vol. 18, no. 2, 1**
**March 2015 (2015-03-01), CL, pages 128 - 133,**
**XP055385903, ISSN: 0717-3458, DOI:**
**10.1016/j.ejbt.2015.01.006**

(52) Cooperative Patent Classification (CPC): (Cont.)

C-Sets
A23V 2002/00, A23V 2200/044, A23V 2250/184,
A23V 2250/20

**Description**

The present invention relates to a liquid composition comprising phycocyanin, a method for preparing the liquid composition, the use of the liquid composition and foodstuff comprising the liquid composition.

There is a great interest in offering foodstuffs in a manner that is appealing as regards both taste and appearance. The color of the foodstuff represents an important selection criterion for the consumer in this connection. Colorings are therefore often added to foodstuffs that inherently have little color of their own in order to make them attractive to the consumer. Colorings can furthermore serve to compensate for color changes or loss of color that occurs during the manufacturing, processing or storage. A constant visual quality is consequently guaranteed for the product.

A distinction can be made between synthetic and natural colorings with respect to the colorings normally used for foodstuffs. Among the most important synthetic food colorings are orange yellow S (E110), quinoline yellow (E104), azorubine (E122), allura red (E129), tartrazine (E102) and cochineal red A (E124). These colorings are suspected, however, of causing Attention Deficit Hyperactivity Disorder (ADHD) in children. These colorings can furthermore cause allergies and allergy-like symptoms. Not least significantly, the azo colorings among them are still suspected of being carcinogenic, because carcinogenic arylamine components can be released when the colorings are metabolized in the body. Against the background of these health risks, the ever stricter foodstuff regulations and the consumer's increasing health awareness, there is naturally more and more of a trend towards the use of natural colorings.

However, with regard to the colors blue and green, this is a particular challenge. As natural blue dyes, for example, anthocyanins can be used. However, the color of anthocyanins is strongly pH dependent. For example, anthocyanins are usually red in the presence of a pH value in the acidic range, as is customary in, for example, beverages. A blue dyeing is only achieved at a higher pH value. In addition, anthocyanins are water-soluble and bleed easily when used as a food dye. However, this disadvantage can be overcome by lacquering the anthocyanins. The anthocyanin is applied to a carrier, usually aluminum hydroxide. The aluminum flakes formed from anthocyanins have a blue color even at moderate acidic pH range and do not bleed. Such a dye is, according to the declaration, a natural dye, but relatively high contents of aluminum are present. Since aluminum is suspected to be involved in development of Alzheimer's disease, such a blue dye does not meet the needs of consumers.

For the preparation of green dyes, either blue dyes are mixed with yellow dyes or chlorophylls (E140), copper chlorophylls (E141) and the saponified chlorophyllins and copper chlorophyllins are used. However, copper chlorophylls do not occur naturally, but are produced synthetically by reaction of magnesium chlorophyll with copper salts and, thus, do not satisfy the requirements of the consumer. Natural magnesium chlorophylls and magnesium chlorophyllins are usually insufficiently stable in many acidic applications.

There is, therefore, a need for a purely natural blue or a green dye prepared from the blue.

With regard to a blue dye, the spirulina algae, for example *Spirulina platensis* (*syn. Arthrospira platensis*)*,* is of particular interest. This blue-green microalgae is known both as a food supplement and as a raw material for food coloring. Spirulina is rich in protein (64 to 74% by weight of dry matter), 6 to 13% by weight of lipids, about half of which are fatty acids and about 12 to 20% by weight of carbohydrates (A. Vonshak, "Spirulina Platensis (Arthrospira)", Taylor & Francis 1997, Chapter 10, pages 175 to 204).

The pigments mainly found in spirulina are two blue, water-soluble biliproteins, c-phycocyanin and allophycocyanin, which are summarized as phycocyanin, green chlorophylls and yellow xanthophylls. Altogether the pigments generate the green color of the algae powder. The phycocyanin content is determined according to the method described by Yoshikawa (N. Yoshikawa, A. Belay, Single Laboratory Validation of a Method for the Determination of c-Phycocyanin and Allophycocyanin in Spirulina (Arthrospira) Supplements and Raw Materials by Spectrophotometry, Journal of AOAC INTERNATIONAL 2008, 91, 524-529.

The microalgae *Spirulina platensis* is used as a food supplement or as a raw material for food coloring. The dietary supplement is taken as a tablet or as a powder in gelatin capsules. The tablets have only a weak smell and taste after algae and sea. The use of the dried algae for dyeing in green shades is also possible in very dry foods, such as biscuits, crispbread or rusk. However, the use of green, aqueous slurries of the algae or the use of green algae powder in moist foodstuffs, such as gummy bears, is disadvantageous since a repugnant odor forms due to microbial activity, a problem also described in US 2006/210545. Since the phycocyanins are already denaturing at 60 to 65 °C, whereby the color is lost, aqueous slurries of spirulina algae powder cannot be stabilized microbially by pasteurization.

In order to use Spirulina as blue food colorant or green colorant when blended with yellow extracts and to avoid microbial decomposition, an extraction and purification of phycocyanin is carried out. To provide long term stability the phycocyanin is preferably provided in the form of a powder in which the phycocyanin was diluted by a carrier prior to spray, freeze or vacuum drying. The phycocyanin contents of such powder is usually 20-35 w%.

Appropriate carriers are trehalose, trisodium citrate, maltodextrin, lactose or mixtures thereof. Such phycocyanin powders are commercially available from e.g. DIC, Japan, or HuaKang, China, and here will be referred to as phycocyanin powder.

However, in food industry liquid compositions are preferred, since such liquid compositions are easier to handle in view of dust formation and are also easier to dose.

DE-A-100 59 107 describes aqueous or aqueous-alcoholic extracts of Spirulina, which may further comprise an oily component, such as olive oil, sunflower oil, soybean oil, shea butter, etc. In such emulsion compositions, emulsifiers may also be added. The composition is used in cosmetics, in particular for skin protection, and may also contain additional common cosmetic agents. The extract of Spirulina is present in an amount of 1 wt%. The concentration of Spirulina is very low and at this concentration the liquid composition cannot be used as a colorant for food.

JP-A-2004-203952 relates to an aqueous dye liquid comprising an algae-derived dye and preferably a silicon resin defoaming agent and/or a fatty acid ester emulsifier. The aqueous liquid may further contain 10 to 40 wt% of glycerol. However, the glycerol content is quite low and may not be sufficient to inhibit microbial growth.

WO-A-2012/059590 describes water-in-oil-in-water emulsions for stabilizing natural dyes. As one of a large number of specific dyes phycocyanin from Spirulina is mentioned.

US-A-2014/0371433 relates to a preparation method for producing a highly pure phycocyanin product. In the preparation method, chitosan is added to a suspension of algae in water to facilitate the removal of impurities. After filtration an aqueous solution of phycocyanin is obtained. The solution can be used directly or further concentrated. Further, a sugar or a salt can be added to further stabilize the solution. However, said document is silent about the problem of microbial growth in the aqueous composition.

US-A-2012/00400144 describes the use of animal tissue, plants, fungi, yeasts protozoa and bacterins as a source for various phospholipids. It further describes that Spirulina can serve as a phospholipid source. Said document merely describes Spirulina as phospholipid source. A liquid composition comprising phycocyanin as a colorant for food and the problems associated therewith is not mentioned.

WO-A-2015/090697 relates to blue coloring compositions useful in the manufacture of food, feed, cosmetic and pharmaceutical products and preparations based on a stabilized phycocyanin, which is a complex of at least one phycocyanobilin and at least one polyphenol.

The object of the present invention is the provision of a liquid dye composition, which can be easily prepared from phycocyanin powder, easily handled and dosed, avoids the formation of foam when prepared, is keeping the phycocyanin stable for a long time and prevents microbial growth in the liquid.

Said problem is solved by a composition comprising 3 to 10 wt% of phycocyanin, at least 50 wt% of glycerol, and 0.1 to 3 wt% of at least one emulsifier based on the total weight of the liquid composition. The remainder of the composition is composed of other suitable liquids or solids not stimulating or permitting microbial growth.

The problem is also solved by a method for preparing the liquid composition of the present invention comprising dissolving phycocyanin powder and the emulsifier in glycerol and optional water.

The problem of the present invention is further solved by the use of the liquid composition of the present invention as food colorant or coloring foodstuff. Preferred embodiments are described in subclaims 2 to 10, 12 and 14.

According to the present invention the term "phycocyanin" refers to two blue, water-soluble biliproteins, i.e. c-phycocyanin and allophycocyanin. Both biliproteins are usually used as a mixture.

According to the present invention, the term "stable" refers to a composition which shows no color change, does not gel or forms precipitates over a period of up to 12 months on storage between 4 and 7 ° C.

According to the present invention "microbial stable" refers to a composition which avoids the microbial growth over a period of at least 12 months if stored cold (4 to 7 °C)

Water activity or $a_w$ is the partial vapor pressure of water in a substance divided by the standard state partial vapor pressure of water.

The water activity is defined as follows:

$$a_w = p/p^*$$

where p is the vapor pressure of water in the solution, and p* is the vapor pressure of pure water at the same temperature.

In the field of food science, the standard state is defined as the partial vapor pressure of pure water at the same temperature. Using this particular definition, pure distilled water has a water activity of exactly one. Water activity values, $a_w$, below 0.75 suppress microbial growth and, thus, are necessary for a microbiologically stable product. Such $a_w$ values can be achieved by blends of water with carbohydrates, glycerol, propylene glycol.

Water activity was measured by the dew point method using a Fast lab water activity meter from GBX at 25°C and taking the value stabilized after 6 min latest.

However, when dissolving phycocyanin powder in glycerol or glycerol/water blends such strong foaming occurs that the preparation must be stored overnight to allow the foam to settle. But even after such long time the foam does not collapse and approximately half of the liquid or even more remains in the foam and would be lost if the liquid is recovered. Surprisingly, the liquid composition in accordance with the present invention avoids the formation of foam and also provides a microbial stable composition.

In a preferred embodiment in combination with any of the above or below embodiments, the liquid composition according to the present invention comprises an emulsifier selected from the group consisting of lecithins, mono- and/or diglycerides of fatty acids, polyglycerol esters of fatty acids, or mixtures thereof. More preferably, the emulsifier is mono- and/or diglyceride of fatty acids or lecithin, in particular, lecithin.

Lecithins are phospholipids, composed of phosphoric acid, choline, glycerol and various fatty acids. Lecithins are usually accompanied by other phospholipids as sphingomyelins and glycolipids. Commercially available "lecithins" are usually lecithin extracts diluted in natural oils composed of triglycerides, e.g. soy oil or sunflower oil. Glycerophospholipids in lecithin include phosphatidylcholine, phosphatidylethanolamine, phosphatidylinositol, phosphatidylserine, and phosphatidic acid. Lecithins are used as food additives and are designated as E322. E322 further includes hydrolyzed lecithins, wherein one fatty acid is removed from the glycerophospholipids enzymatically. Thus, the resulting lysolecithins are composed mainly of lysophosphatidylcholine, lysophosphatidylethanolamine, lysophosphatidylinositol, and lysophosphatidylserine.

It was a surprising discovery that both types of lecithin, non-hydrolyzed and hydrolyzed lecithin reduce the foam when dissolving phycocyanin powder in glycerol/water mixtures.

Mono- and/or diglycerides of fatty acids are also used as food additives and are designated as E471. This emulsifier is prepared by hydrolysis e.g. from sunflower, soy or palm or coconut oil which finally determines its fatty acid composition.

Polyglycerol esters of fatty acids are also used as food additives and are designated as E475.

In a preferred embodiment in combination with any of the above or below embodiments, the liquid composition according to the present invention comprises lysolecithins, e.g. Habo HHSL from Compass Foods and non-hydrolyzed lecithin, such as Topcithin SF from Cargill.

Mono- and Diglycerides of fatty acids as they are commercially available from e.g. Hafen Mühlen Werke GmbH, Germany, based on high oleic acid sunflower oil.

In a further preferred embodiment in combination with any of the above or below embodiments, the liquid composition according to the present invention comprises the phycocyanin on a carrier material. Preferred carrier materials are trehalose, maltodextrin, citrate, lactose or mixtures, thereof. More preferably, the carrier is citrate or trehalose or a mixture thereof and particularly preferably the phycocyanin powder contains citrate (trisodium citrate E331, tripotassium citrate E332, trimagnesium dicitrate, calcium citrate E333) only as a carrier.

In a preferred embodiment in combination with any of the above or below embodiments, the phycocyanin is present on a carrier in an amount of 10 to 40 wt%, based on the total weight of carrier and phycocyanin. More preferably, the phycocyanin content is 20 to 35 wt%, particularly preferably 25 to 30 wt%, based on the total weight of carrier and phycocyanin.

In another preferred embodiment in combination with any of the above or below embodiments, the liquid composition according to the present invention comprises 50 to 70 wt% of glycerol and 10 to 35 wt% of water, more preferably 50 to 65 wt% of glycerol and 15 to 30 wt% of water, in particular 50 to 60 wt% of glycerol and 15 to 25 wt% of water, based on the total weight of the liquid composition.

In a preferred embodiment in combination with any of the above or below embodiments, the liquid composition according to the present invention has a viscosity not more than 2000 mPas at 25°C, more preferably not more than 1500 mPas at 25°C. The viscosity is determined with a classical rotational viscosimeter from Haake/Thermo Scientific ViscoTester 6R plus equipped with a Type R2 spindle (10-30 rpm) in a beaker of 60 mm diameter.

In a further preferred embodiment in combination with any of the above or below embodiments, the liquid composition according to the present invention further comprises a natural colorant. More preferably, the natural colorant is selected from the group consisting of a carotinoid, a Safflower petal extract concentrate, a Gardenia yellow extract concentrate, a curcumin extract, a yellow carrot extract, an anthocyanin containing vegetable or fruit concentrate or mixtures thereof.

In another preferred embodiment in combination with any of the above or below embodiments, the liquid composition according to the present invention further comprises common additives used in food compositions, such as acidifiers, e.g. citric acid or trisodium citrate, flavorings, preservatives, such as potassium sorbate, fruit and plant extracts and concentrates thereof, for example from Carthamus tinctorius petals, Gardenia Jasminoides fruit, sweeteners, antioxidants such as ascorbic acid, carotenoids and combinations of two or more additives.

In another preferred embodiment in combination with any of the above or below embodiments, the liquid composition according to the present invention comprises 5 to 9 wt% of phycocyanin, more preferably 6 to 8 wt% of phycocyanin, based on the total weight of the liquid composition.

In a further preferred embodiment in combination with any of the above or below embodiments, the liquid composition according to the present invention comprises 0.3 to 1.5 wt% of emulsifier, more preferably 0.5 to 1.0 wt% of emulsifier, particularly preferably 0.5 to 0.75 wt% of emulsifier, based on the total weight of the composition. In particular, the liquid composition comprises 0.5 wt% of lecithin or 0.75 wt% of mono- and/or diglycerides of fatty acids, based on the total weight of the liquid composition.

In another preferred embodiment in combination with any of the above or below embodiments, the liquid composition according to the present invention comprises 5 to 9 wt% of phycocyanin, 50 to 70 wt% of glycerol, 10 to 35 wt% of water and 0.3 to 1.5 wt% of emulsifier, more preferably 6 to 8 wt% of phycocyanin, 50 to 65 wt% of glycerol, 15 to 30 wt% of water and 0.5 to 1.0 wt% of emulsifier, in particular 6 to 8 wt% of phycocyanin, 50 to 60 wt% of glycerol, 15 to 25 wt% of water and 0.5 to 0.75 wt% of emulsifier, based on the total weight of the liquid composition.

In the method according to the present invention phycocyanin and the emulsifier are dissolved in glycerol and optionally water is added. In a preferred embodiment in combination with any of the above or below embodiments, in the method according to the present invention the emulsifier is dissolved in glycerol and optional water and the phycocyanin is added as powder to the solution.

The liquid composition according to the present invention is used for the production of foodstuffs. The composition according to the present invention is preferably used for the production of colored beverages, milk products, ice cream, confectionery or coatings for coated products, such as, for example, chocolate kernels, nuts, chewing gum and sugar beads.

The foodstuff contains 0.2 to 2 wt% of the composition according to the invention, based on the total weight of the foodstuff. In a preferred embodiment in combination with any one of the above or below embodiments, the foodstuff contains 0.2 to 1.5 wt% of the composition according to the invention, based on the total weight of the foodstuff.

Surprisingly, a liquid formulation from phycocyanin powder can be prepared applying the recipe of the present invention without the generation a significant quantity of foam. Furthermore, the phycocyanin content is high, no microbial growth occurs and the color shade does not change for at least 1 year at 4 to 7°C.

The advantages of the present invention are the provision of a liquid formulation prepared from phycocyanin powder, which can be easily handled and dosed without formation of dust and can be used to color foodstuff. The color content is between 3 to 10 wt%, which is optimal for industrial applications. Further, no material is lost and no waiting time is required in the preparation of the formulation due to almost non-foaming. The viscosity is low and the liquid composition of the present invention can be easily poured, dosed and filled. In addition, no microbial growth is possible and the liquid composition in accordance with the present invention meets the EU requirements for a coloring food. The liquid composition of the present invention is further stable for at least one year at 4 to 7 °C. The color shade does not deteriorate during preparation or storage.

The following examples further describe the present invention.

**EXAMPLES**

General procedure:

A water-glycerol mixture was prepared in all the tests and the emulsifiers were incorporated either via a stirrer or Ultra-Turrax. Subsequently, phycocyanin powder is added and dissolved by means of a stirrer. After the addition is complete, the resulting composition is stirred for further 5 minutes.

Materials:

Demineralized water
Glycerol

E322 Topcithin SF® (sunflower lecithin Cargill;)

E471 Mono-, Diglyceride from High Oleic acid Sunflower oil (Hafen-Mühlen-Werke GmbH)

Phycocyanin powder from Spirulina algae based on citrate as a carrier was purchased from HuaKang, China, composed as follows: $29.5 \pm 0.5$ wt% phycocyanin, 50% trisodium citrate, the remaining $20.5 \pm 0.5$ wt% are colorless algae biomass.

When dissolving phycocyanin powder in a mixture of water and glycerol under stirring, the formation of foam is observed and a voluminous fluffy dispersion is obtained (Comparative Example 1). Initially the whole formulation becomes a foam. Even after 14 h the foam did not collapse and only half of the phycocyanin containing liquid drains out from the foam. The other half of the precious liquid remains entrapped in the foam and, consequently, would be lost as this foam cannot be applied to color food. The agents used in Examples 1 to 3, almost fully prevents the formation of foam and the preparations can be immediately filled in selling packages without any significant losses. The viscosity of the invented preparation is favorably low and the $a_w$ value is below 0.75.

Table 1: Composition and physicochemical characteristics of formulations

| | | Example 1 | Example 2 | Example 3 | Comparative Example 1 |
|---|---|---|---|---|---|
| **Phycocyanin content** | | 8.7 wt% | 6.5 wt% | 6.6 wt% | 6.4 wt% |
| **Composition** | **Phycocyanin powder** | 28.8 wt% | 22.0 wt% | 22.0 wt% | 22.0 wt% |
| | **Demineralized Water** | 17.6 wt% | 19.5 wt% | 19.25 wt% | 19.5 wt% |
| | **Glycerol** | 53.1 wt% | 58.0 wt% | 58.0 wt% | 58.5 wt% |
| | **Emulsifier** | 0.5 wt% E322 | 0.5 wt% E322 | 0.75% E471 | none |
| **Viscosity (temperature)** | | 1065 mPas (20.6°C) | 217 mPas (23.8°C) | 200 mPas (24.0°C) | Not measurable, foam only |
| **Dry matter** (by thermo gravimetry, isotherm at 103°C in sand, 16 h) | | 71.5% | 71.5% | 71.2% | 70.2% |
| **$a_w$-value** | | 0.596 | 0.616 | 0.615 | 0.614 |
| **Volumes liquid/foam after 1 h** | | 200 ml/40 ml | 200 ml/25 ml | 200 ml/20 ml | Foam only |
| **Volumes liquid/foam after 14 h** | | 200 ml/40 ml | 200 ml/25 ml | 200 ml/20 ml | 100 ml/280 ml |
| **Foam volume of total volume after 14 h** | | 40/240=17% | 11% | 9% | 74% |

Table 2:

| | | Example 1 | Example 2 | Example 3 | Comparative Example 1 |
|---|---|---|---|---|---|
| **Phycocyanin example : demineralized water** | | 0.5 : 1000 | 0.67 : 1000 | 0.67 : 1000 | 0.67 : 1000 |
| **Phycocyanin content in dilution** | | 0.0043 wt% | 0.0043 wt% | 0.0044 wt% | 0.0043 wt% |
| **L*a*b*-values of dilution** | **L** | 88.8 | 88.2 | 87.5 | 89.2 |
| | **A** | -9.1 | -9.5 | -9.1 | -9.4 |
| | **b** | -15.7 | -16.4 | -15.2 | -16.2 |
| **Turbidity of dilution [FNU] by Hach 2100Qis** (at 90° scatter angle) | | 3.02 | 3.88 | 6.33 | 1.47 |

Results:

As can be seen from Examples 1 to 3 of Table 1, when preparing a liquid composition in accordance with the present invention, the foam formation is suppressed compared to Comparative Example 1.

As can be seen from Table 2, the color does not deteriorate and the turbidity is low.

**Claims**

1.  A liquid composition comprising:

    3 to 10 wt% of phycocyanin;
    at least 50 wt% of glycerol; and
    0.1 to 3 wt% of at least one emulsifier

    based on the total weight of the liquid composition.

2.  The liquid composition according to claim 1, wherein the emulsifier is selected from the group consisting of lecithins, lysolecithins, mono- and/or diglycerides of fatty acids, polyglycerol esters of fatty acids, or mixtures thereof.

3.  The liquid composition according to claim 1 or 2 comprising 5 to 9 wt% of phycocyanin, based on the total weight of the liquid composition.

4.  The liquid composition according to at least one of claims 1 to 3, wherein the phycocyanin is on a carrier material.

5.  The liquid composition according to claim 4, wherein the carrier material is selected from the group consisting of, trehalose, maltodextrin, any citrate, or mixtures thereof

6.  The liquid composition according to at least one of claims 1 to 5 comprising 50 to 70 wt% of glycerol and 10 to 35 wt% of water.

7.  The liquid composition according to at least one of claims 1 to 6, wherein the emulsifier is mono- and/or diglycerides of fatty acids or a lecithin.

8.  The liquid composition according to at least one of claims 1 to 7 having a viscosity of <2000 mPas at 25 °C determined with a Haake spindle rheometer.

9.  The liquid composition according to at least one of claims 1 to 8, further comprising a natural colorant.

10. The liquid composition according to claim 9, wherein the natural colorant is selected from the group consisting of a carotinoid, a Safflower petal extract concentrate, a Gardenia yellow extract concentrate, a carrot concentrate, curcumin extract, or an anthocyanin containing vegetable or fruit concentrate or mixtures thereof.

11. A method for preparing a liquid composition according to at least one of claims 1 to 10 comprising dissolving phycocyanin and the emulsifier in glycerol and optional water.

12. The method according to claim 11, wherein the emulsifier is dissolved in glycerol and optional water, and the phycocyanin is added as a powder to the solution.

13. Use of the liquid composition according to at least one of claims 1 to 10 for coloring food.

14. Use of the liquid composition according to at least one of claims 1 to 10 in a foodstuff.

15. The use of claim 13 or 14, wherein the foodstuff is a beverage, a dairy product, ice cream, confectionery or a dragée coating.

16. A foodstuff comprising the liquid composition of at least one of claims 1 to 10, wherein the foodstuff contains 0.2 to 2 wt% of the composition, based on the total weight of the foodstuff.

**Patentansprüche**

1. Flüssige Zusammensetzung, umfassend:

   3 bis 10 Gew.-% Phycocyanin;
   mindestens 50 Gew.-% Glycerin; und
   0,1 bis 3 Gew.-% mindestens eines Emulgators

   bezogen auf das Gesamtgewicht der flüssigen Zusammensetzung.

2. Flüssige Zusammensetzung nach Anspruch 1, wobei der Emulgator ausgewählt ist aus der Gruppe bestehend aus Lecithinen, Lysolecithinen, Mono- und/oder Diglyceriden von Fettsäuren, Polyglycerinestern von Fettsäuren oder Mischungen davon.

3. Flüssige Zusammensetzung nach Anspruch 1 oder 2, umfassend 5 bis 9 Gew.-% Phycocyanin, bezogen auf das Gesamtgewicht der flüssigen Zusammensetzung.

4. Flüssige Zusammensetzung nach mindestens einem der Ansprüche 1 bis 3, wobei das Phycocyanin auf einem Trägermaterial vorliegt.

5. Flüssige Zusammensetzung nach Anspruch 4, wobei das Trägermaterial ausgewählt ist aus der Gruppe bestehend aus Trehalose, Maltodextrin, einem Citrat oder Mischungen davon.

6. Flüssige Zusammensetzung nach mindestens einem der Ansprüche 1 bis 5, umfassend 50 bis 70 Gew.-% Glycerin und 10 bis 35 Gew.-% Wasser.

7. Flüssige Zusammensetzung nach mindestens einem der Ansprüche 1 bis 6, wobei der Emulgator Mono- und/oder Diglyceride von Fettsäuren oder ein Lecithin ist.

8. Flüssige Zusammensetzung nach mindestens einem der Ansprüche 1 bis 7 mit einer Viskosität von <2000 mPas bei 25 °C, bestimmt mit einem Haake-Spindelrheometer.

9. Flüssige Zusammensetzung nach mindestens einem der Ansprüche 1 bis 8, umfassend ferner einen natürlichen Farbstoff.

10. Flüssige Zusammensetzung gnach Anspruch 9, wobei der natürliche Farbstoff ausgewählt ist aus der Gruppe bestehend aus einem Carotinoid, einem Saflorblütenextraktkonzentrat, einem Gardeniengelbextraktkonzentrat, einem Karottenkonzentrat, einem Curcuminextrakt oder einem Anthocyan enthaltenden Gemüse- oder Fruchtkonzentrat oder Mischungen davon.

11. Verfahren zur Herstellung einer flüssigen Zusammensetzung nach mindestens einem der Ansprüche 1 bis 10, umfassend das Lösen von Phycocyanin und dem Emulgator in Glycerin und optional Wasser.

12. Verfahren nach Anspruch 11, wobei der Emulgator in Glycerin und optional Wasser gelöst wird und das Phycocyanin als Pulver zu der Lösung gegeben wird.

13. Verwendung der flüssigen Zusammensetzung nach mindestens einem der Ansprüche 1 bis 10 zum Färben von Lebensmitteln.

14. Verwendung der flüssigen Zusammensetzung nach mindestens einem der Ansprüche 1 bis 10 in einem Lebensmittel.

15. Verwendung nach Anspruch 13 oder 14, wobei das Lebensmittel ein Getränk, ein Milchprodukt, Eiscreme, Süßwaren oder eine Dragee-Beschichtung ist.

16. Lebensmittel, umfaassend die flüssige Zusammensetzung nach mindestens einem der Ansprüche 1 bis 10, wobei das Lebensmittel 0,2 bis 2 Gew.-% der Zusammensetzung, bezogen auf das Gesamtgewicht des Lebensmittels, enthält.

**Revendications**

1.  Composition liquide comprenant :

    de 3 à 10 % en pds de phycocyanine ;
    au moins 50 % en pds de glycérol ; et
    de 0,1 à 3 % en pds d'au moins un agent émulsifiant sur la base du poids total de la composition liquide.

2.  Composition liquide selon la revendication 1, dans laquelle l'agent émulsifiant est sélectionné dans le groupe constitué des lécithines, lysolécithines, mono-et/ou diglycérides d'acides gras, poly(esters de glycérol) d'acides gras, ou de leurs mélanges.

3.  Composition liquide selon la revendication 1 ou 2 comprenant de 5 à 9 % en pds de phycocyanine, sur la base du poids total de la composition liquide.

4.  Composition liquide selon au moins l'une des revendications 1 à 3, dans laquelle la phycocyanine se trouve sur un matériau de support.

5.  Composition liquide selon la revendication 4, dans laquelle le matériau de support est sélectionné dans le groupe constitué, du tréhalose, de la maltodextrine, d'un quelconque citrate, ou de leurs mélanges.

6.  Composition liquide selon au moins l'une des revendications 1 à 5 comprenant de 50 à 70 % en pds de glycérol et de 10 à 35 % en pds d'eau.

7.  Composition liquide selon au moins l'une des revendications 1 à 6, dans laquelle l'agent émulsifiant est des mono-et/ou diglycérides d'acides gras ou une lécithine.

8.  Composition liquide selon au moins l'une des revendications 1 à 7 ayant une viscosité de < 2 000 mPa•s à 25°C déterminée avec un rhéomètre à broche de Haake.

9.  Composition liquide selon au moins l'une des revendications 1 à 8, comprenant en outre un colorant d'origine naturelle.

10. Composition liquide selon la revendication 9, dans laquelle le colorant d'origine naturelle est sélectionné dans le groupe constitué d'un caroténoïde, d'un concentré d'extrait de pétales de carthame, d'un concentré d'extrait jaune de gardénia, d'un concentré de carotte, d'un extrait de curcumine, ou d'un concentré de légume ou de fruit contenant des anthocyanines ou leurs mélanges.

11. Procédé de préparation d'une composition liquide selon au moins l'une des revendications 1 à 10 comprenant la dissolution de la phycocyanine et de l'agent émulsifiant dans du glycérol et de l'eau facultative.

12. Procédé selon la revendication 11, dans lequel l'agent émulsifiant est dissous dans du glycérol et de l'eau facultative, et la phycocyanine est ajoutée sous la forme d'une poudre à la solution.

13. Utilisation de la composition liquide selon au moins l'une des revendications 1 à 10 pour colorer un aliment.

14. Utilisation de la composition liquide selon au moins l'une des revendications 1 à 10 dans un produit alimentaire.

15. Utilisation selon la revendication 13 ou 14, dans laquelle le produit alimentaire est une boisson, un produit laitier, une glace, une confiserie ou un enrobage de dragée.

16. Produit alimentaire comprenant la composition liquide d'au moins l'une des revendications 1 à 10, dans lequel le produit alimentaire contient de 0,2 à 2 % en pds de la composition, sur la base du poids total du produit alimentaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006210545 A
- DE 10059107 A
- JP 2004203952 A
- WO 2012059590 A
- US 20140371433 A
- US 201200400144 A
- WO 2015090697 A

### Non-patent literature cited in the description

- **A. VONSHAK.** Spirulina Platensis (Arthrospira). Taylor & Francis, 1997, 175-204
- **N. YOSHIKAWA ; A. BELAY.** Single Laboratory Validation of a Method for the Determination of c-Phycocyanin and Allophycocyanin in Spirulina (Arthrospira) Supplements and Raw Materials by Spectrophotometry. *Journal of AOAC INTERNATIONAL,* 2008, vol. 91, 524-529